# EUROPÄISCHE PATENTSCHRIFT

(11) **EP 4 428 566 B1**
(45) Veröffentlichungstag und Bekanntmachung des Hinweises auf die Patenterteilung: **16.07.2025**
(21) Anmeldenummer: 23160891.0
(22) Anmeldetag: 09.03.2023
(51) Int. Cl.: G01S 7/481, G01S 17/42

(54) **LASERSCANNER ZUM SCANNEN EINER UMGEBUNG UM EINE ACHSE**
LASER SCANNER FOR SCANNING AN ENVIRONMENT AROUND AN AXIS
SCANNER LASER POUR BALAYER UN ENVIRONNEMENT AUTOUR D'UN AXE

(43) Veröffentlichungstag der Anmeldung: 11.09.2024
(73) Patentinhaber: RIEGL Laser Measurement Systems GmbH, 3580 Horn (AT)
(72) Erfinder: RIEGL, Johannes, 3754 Trabenreith (AT); REICHERT, Rainer, 3580 Horn (AT)
(74) Vertreter: Weiser Voith Gugler Patentanwälte Partnerschaft

(56) Entgegenhaltungen:
- EP-A2- 2 293 013
- US-A1- 2008 316 463

## Beschreibung

Die vorliegende Erfindung betrifft einen Laserscanner zum Scannen einer Umgebung um eine Achse, welcher eine Basis umfasst mit einem Lasersender zum Aussenden eines Sendestrahls, einem Laserempfänger zum Empfangen des an der Umgebung als Empfangsstrahl reflektierten Sendestrahls, einem zur Achse geneigten gemeinsamen Drehspiegel für die Sende- und Empfangsstrahlen, sowie einem Motor zum Drehen des Drehspiegels um die Achse, ein von der Basis getragenes, rund um den Drehspiegel herum angeordnetes Ringfenster für den Durchtritt der Sende- und Empfangsstrahlen, und einen vom Ringfenster basisabgewandt getragenen Kopf, der eine erste auf den Drehspiegel ausgerichtete Umlenkung für den Sendestrahl und eine zweite auf den Drehspiegel ausgerichtete Umlenkung für den Empfangsstrahl enthält.

Derartige Laserscanner zur Umgebungserfassung werden als sogenannte "Rundumscanner" in einer Vielzahl von Anwendungen eingesetzt, insbesondere zum Scannen von Gebäuden, Tunneln, Bergwerken usw., und können entweder stationär, z.B. auf einem Stativ, oder mobil, z.B. an einem Fahrzeug montiert, eingesetzt werden. Dabei sendet der Lasersender in der Basis einen gepulsten oder modulierten Sendestrahl aus, welcher von der ersten Umlenkung im Kopf auf den Drehspiegel umgelenkt wird. Durch sein Drehen fächert der Drehspiegel den Sendestrahl drehsymmetrisch um die Achse in die Form einer Scanscheibe oder eines Scankegels auf, mit welcher oder welchem durch das Ringfenster hindurch die zu vermessende Umgebung abgetastet ("gescannt") wird. Der von der Umgebung zurückreflektierte Empfangsstrahl wird über den Drehspiegel und die zweite Umlenkung im Kopf in Richtung der Basis zum Empfänger umgelenkt. Anhand von Laufzeitmessungen des umgebungsreflektierten Empfangsstrahls werden in bekannter Weise Entfernungsmesspunkte und daraus und aus der jeweils zugeordneten Drehspiegelausrichtung eine Abtastpunktewolke (ein "3D-Modell") der Umgebung in einem Koordinatensystem erstellt.Laserscanner sind z.B. aus US 2008/0316463 A1 und aus EP 2 293 013 A2 bekannt.

Da alle elektrisch versorgten ("aktiven") Komponenten des Laserscanners wie Lasersender, Laserempfänger, Motor und Elektronik in der Basis untergebracht sind und im Kopf lediglich "passive" mechanische und optische Komponenten angeordnet sind, ergibt sich ein kompakter Aufbau mit kurzen Kabelwegen. Dazu müssen allerdings der Sende- und Empfangsstrahl zwischen Basis und Kopf jeweils den Strahlengang der Scanscheibe bzw. des Scankegels kreuzen, wozu Sende- und Empfangsstrahl in diesem Bereich eine Freistrecke durchlaufen. Um Verluste zu vermeiden, ist es notwendig, beim Zusammenbau des Laserscanners den Kopf und die Basis präzise gegeneinander auszurichten, sodass der vom Lasersender ausgesandte Sendestrahl genau auf die erste Umlenkung und der von der zweiten Umlenkung umgelenkte Empfangsstrahl genau auf den Empfänger trifft. Eine derartige Ausrichtung ist äußerst aufwändig und erfordert den Einsatz von Fachpersonal. Kommt es während des Betriebs z.B. durch Erschütterungen zu einer geringfügigen Verdrehung oder Verschiebung des Kopfes gegenüber der Basis und somit zu einer Fehlausrichtung der Sende- und Empfangsstrahlen, ist eine aufwändige Neuausrichtung erforderlich.

Die Erfindung setzt sich zum Ziel, einen kompakten Laserscanner zu schaffen, der einfach zusammengebaut werden kann und im Betrieb robust ist.

Dieses Ziel wird mit einem Laserscanner der einleitend genannten Art erreicht, welcher sich erfindungsgemäß dadurch auszeichnet, dass an den Lasersender ein flexibler erster Lichtleiter und an den Laserempfänger ein flexibler zweiter Lichtleiter angeschlossen ist,
wobei der Kopf eine erste Halterung für den Ausgang des flexiblen ersten Lichtleiters und eine zweite Halterung für den Eingang des flexiblen zweiten Lichtleiters trägt, und
wobei die erste Halterung den Ausgang starr auf die erste Umlenkung und die zweite Halterung den Eingang starr auf die zweite Umlenkung ausrichtet.

Die Erfindung bricht mit dem Paradigma, dass der sich zwischen Basis und Kopf erstreckende Raum des Laserscanners rund um den Drehspiegel frei von jedweden Komponenten zu halten sei. Dicke, elektrischen Strom führende Kabel werden jedoch vermieden: Lediglich zwei dünne, flexible Lichtleiter werden durch diesen Raum hindurch geführt. Die Erfinder haben ferner erstmals erkannt, dass diese flexiblen Lichtleiter schon aufgrund der niemals völlig zu unterbindenden Vibrationen des Laserscanners im stationären Betrieb und umso mehr im mobilen Betrieb an einem mit laufenden Bewegungen und Erschütterungen konfrontierten Fahrzeug die Ergebnisse beim Scannen der Umgebung kaum oder sogar gar nicht beeinträchtigen. Umgekehrt bewirken die Lichtleiter hingegen aufgrund ihrer Flexibilität, dass eine präzise Ausrichtung des Kopfes gegenüber der Basis nicht erforderlich ist, was den Zusammenbau des Laserscanners wesentlich vereinfacht und ihn überdies robust macht gegenüber während seines Betriebs allenfalls auftretenden Erschütterungen od.dgl. In ihren montierten Stellungen sind die kopfseitigen Enden der Lichtleiter von den Halterungen jeweils starr, **d.h.** fest und in der gewünschten Lage, auf die jeweilige Umlenkung ausgerichtet. So leitet der erste Lichtleiter den Sendestrahl vom angeschlossenen Lasersender fast völlig verlustfrei auf die erste Umlenkung, und der zweite Lichtleiter leitet den Empfangsstrahl von der zweiten Umlenkung wieder fast völlig verlustfrei zum Empfänger, u.zw. jeweils unabhängig von der Relativstellung des Kopfes gegenüber der Basis.

Im Ergebnis ermöglicht die Flexibilität der Lichtleiter einen einfachen und schnellen Zusammenbau und eine größere Robustheit des Laserscanners ohne aufwändiges Ausrichten von Kopf und Basis aneinander. Infolge der starren Ausrichtung der kopfseitigen Enden der Lichtleiter in den Halterungen wird "by design" eine Fehlausrichtung ausgeschlossen und zwar dauerhaft.

In einer bevorzugten Ausführungsform ist die erste Umlenkung dazu ausgebildet, den Sendestrahl parallel zur Achse auf den Drehspiegel zu richten, und die zweite Umlenkung dazu ausgebildet, den Empfangsstrahl parallel zur Achse vom Drehspiegel zu erhalten. Der achsparallele Sendestrahl schließt dabei mit dem Drehspiegel über dessen gesamte Drehung denselben Winkel ein, sodass die Umgebung gleichmäßig abgetastet wird. Ebenso empfängt der Laserempfänger den Empfangsstrahl über den Drehspiegel aus der Richtung des Sendestrahls und ist damit jeweils auf den gerade gescannten Abtastpunkt der Umgebung gerichtet.

Es ist vorteilhaft, wenn die erste Umlenkung einen dem Drehspiegel im Strahlengang des Sendestrahls vorgeordneten ersten Festspiegel und die zweite Umlenkung einen dem Drehspiegel im Strahlengang des Empfangsstrahls nachgeordneten zweiten Festspiegel umfasst, wobei die beiden Festspiegel gegengleich jeweils um 45° zur Achse geneigt sind. Durch die gegengleiche Neigung der beiden Festspiegel zur Achse verlaufen die Strahlengänge des dem ersten Festspiegel vorgelagerten Sendestrahls und des dem zweiten Festspiegel nachgelagerten Empfangsstrahls von der Achse aus betrachtet zueinander diametral. Folglich können die Sende- und Empfangskanäle sowohl im Kopf als auch in der Basis voneinander relativ weit beabstandet sein, was eine gegenseitige Beeinflussung von Lasersender und Laserempfänger reduziert und deren platzsparende Anordnung in der Basis erleichtert. Darüberhinaus sind die Strahlengänge der Sende- und Empfangsstrahlen im Kopf des Laserscanners platzsparend unterzubringen, sodass der Kopf klein bauen kann.

Dabei ist besonders günstig, wenn der zweite Festspiegel eine achszentrale Öffnung hat, in welcher der erste Festspiegel angeordnet ist. So liegen die beiden Festspiegel auf derselben axialen Höhe, was den für die Strahlengänge axial benötigten Raum weiter verringert und einen besonders kleinen Kopf ermöglicht. Ferner kann durch den achszentralen ersten Festspiegel der Sendestrahl in der Achse auf den Drehspiegel gerichtet und die Umgebung - je nach Neigung des Drehspiegels - mit der Scanscheibe oder dem Scankegel besonders gleichmäßig gescannt werden.

Um den Sendestrahl nach dem ersten Lichtleiter zu kollimieren, umfasst die erste Umlenkung bevorzugt eine Kollimationsoptik im Strahlengang des Sendestrahls. Die Kollimationsoptik verringert die Divergenz des Sendestrahls, sodass die Umgebung mit besonders kleinen Abtastpunkten und somit präzise gescannt werden kann. In Ausführungsformen mit einem ersten Festspiegel ist diese Kollimationsoptik vorteilhafterweise im Strahlengang des Sendestrahls zwischen der ersten Halterung und dem ersten Festspiegel angeordnet, um den axialen Platzbedarf der ersten Umlenkung besonders gering zu halten und die Kollimationsoptik vom Empfangsstrahl zu beabstanden.

Für eine besonders verlustarme Einkopplung des Empfangsstrahls in den zweiten Lichtleiter umfasst die zweiten Umlenkung bevorzugt eine Fokussieroptik im Strahlengang des Empfangsstrahls, z.B. eine oder mehrere Sammellinsen, Kugellinsen, usw. In Ausführungsformen mit einem zweiten Festspiegel ist diese Fokussieroptik vorteilhafterweise im Strahlengang des Empfangsstrahls zwischen dem zweiten Festspiegel und der zweiten Halterung angeordnet, um den axialen Platzbedarf der zweiten Umlenkung besonders gering zu halten und die Fokussieroptik vom Sendestrahl zu beabstanden.

Dabei ist günstig, wenn die zweite Umlenkung zumindest einen der Fokussieroptik im Strahlengang des Empfangsstrahles nachgeordneten dritten Festspiegel zur axialnormalen Faltung des Empfangsstrahls umfasst. Der dritte Festspiegel verlängert durch die Faltung den Weg des Empfangsstrahls zwischen der Fokussieroptik und dem Eingang des zweiten Lichtleiters. Dadurch kann der Empfangsstrahl eine geringe Konvergenz aufweisen und unter kleinem Einkopplungswinkel gänzlich innerhalb eines Akzeptanzwinkels des Eingangs in diesen verlustarm eingekoppelt werden. Umgekehrt erlaubt dies, einen zweiten Lichtleiter mit geringerem Akzeptanzwinkel zu verwenden. Da der Empfangsstrahl dabei in der axialnormalen Ebene geführt ist, wird der axiale Platzbedarf gering gehalten.

In einer vorteilhaften Ausführungsform richtet die erste Halterung den Ausgang parallel zur Achse auf einen um 45° zur Achse geneigten vierten Festspiegel der ersten Umlenkung aus. Auf diese Weise kann der erste Lichtleiter ohne Biegung z.B. annähernd parallel zur Achse von der Basis zur ersten Halterung verlaufen und der Sendestrahl nach dem vierten Festspiegel einen zumindest annähernd axialnormalen, platzsparenden Strahlengang aufweisen.

In ähnlicher Weise richtet in einer weiteren vorteilhaften Ausführungsform die zweite Halterung den Eingang parallel zur Achse auf einen um 45° zur Achse geneigten fünften Festspiegel der zweiten Umlenkung aus. Dadurch kann der zweite Lichtleiter biegungsfrei z.B. annähernd parallel zur Achse von der zweiten Halterung zum Laserempfänger verlaufen.

Das Ringfenster kann verschiedene Querschnittsformen haben, z.B. die Form einer Ellipse, eines regelmäßigen oder unregelmäßigen Vielecks, usw. Bevorzugt hat das Ringfenster die Form eines zur Achse konzentrischen Kreisringes, um einen auf das Ringfenster stets normalen, radialen Austritt des Sendestrahls und Eintritt des Empfangsstrahls zu erzielen.

Die Erfindung wird nachstehend anhand von in den beigeschlossenen Zeichnungen dargestellten Ausführungsbeispielen näher erläutert. In den Zeichnungen zeigen:
Fig. 1 eine Ausführungsform eines erfindungsgemäßen Laserscanners in einem schematischen Längsschnitt;
Fig. 2 den Laserscanner von Fig. 1 in einem schematischen Querschnitt entlang einer Schnittlinie I - I; und
Fig. 3 eine alternative Ausführungsform eines Kopfes des Laserscanners von Fig. 1 in einem schematischen Längsschnitt.

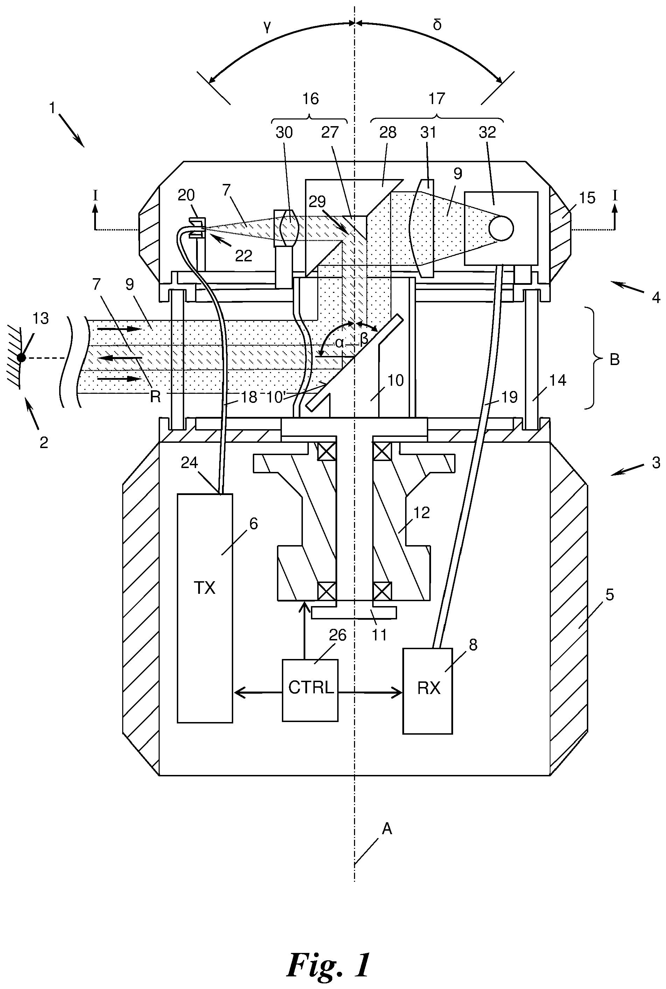

Fig. 1 zeigt einen Laserscanner 1 beim Scannen einer Umgebung 2. Zum stationären Scannen der Umgebung 2 ist der Laserscanner 1 an einem Stativ od.dgl. montiert; zum mobilen Scannen der Umgebung 2 ist der Laserscanner 1 alternativ an einem Fahrzeug, z.B. einem Land- oder Luftfahrzeug, montiert.

Der Laserscanner 1 hat eine Basis 3, welche die aktiven, d.h. die elektrisch versorgten, Komponenten des Laserscanners 1 enthält, und einen gegenüber der Basis 3 entlang einer Achse A versetzten Kopf 4, welcher nur passive, d.h. nicht elektrisch versorgte, optische und mechanische Komponenten des Laserscanners 1 enthält. Die Basis 3 hat ein z.B. zylindrisches Gehäuse 5 und darin elektrooptische Komponenten des Laserscanners 1, insbesondere einen Lasersender 6, der einen gepulsten oder modulierten Sendestrahl 7 aussendet, und einen Laserempfänger 8, der eine Reflexion des Sendestrahls 7 an der Umgebung 2 als Empfangsstrahl 9 empfängt. Die Basis 3 hat ferner einen gegenüber der Achse A geneigten gemeinsamen Drehspiegel 10 für die Ablenkung der Sende- und Empfangsstrahlen 7, 9, welcher in einem axialen Abschnitt B zwischen dem Gehäuse 5 der Basis 3 und dem Kopf 4 angeordnet ist. Der Drehspiegel 10 wird über eine Welle 11 von einem im Gehäuse 5 angeordneten Motor 12 der Basis 3 um die Achse A gedreht, sodass die Sendestrahlen 7 an der Spiegelfläche 10' des Drehspiegels 10 in aufeinanderfolgende Richtungen R um die Achse A scheiben- oder kegelförmig aufgefächert und ausgesandt und die an Abtastpunkten 13 der Umgebung 2 reflektierten Empfangsstrahlen 9 über den Drehspiegel 10 empfangen werden.

In dem axialen Abschnitt B trägt die Basis 3 ein rund um den Drehspiegel 10 herum angeordnetes Fenster, d.h. ein Ringfenster 14, für den Durchtritt der Sende- und Empfangsstrahlen 7, 9. Das Ringfenster 14 dient zum Schutz des Drehspiegels 10 und der Kopf- und Basiskomponenten und zur Lagerung des Kopfes 4 an der Basis 3. Die Basis 3, das Ringfenster 14 und der Kopf 4 können auf viele Arten miteinander verbunden sein, **z.B.** ineinander oder miteinander verschraubt, ineinander geklemmt, aneinander verrastet, Bajonett-artig gekuppelt, usw. oder einfach aufeinander gestapelt sein.

Der Kopf 4 hat ebenfalls ein z.B. zylindrisches Gehäuse 15. Das Gehäuse 15 enthält eine erste Umlenkung 16, welche auf den Drehspiegel 10 ausgerichtet ist und so den vom Lasersender 6 ausgesandten Sendestrahl 7 zum Drehspiegel 10 hin umlenkt. Das Gehäuse 15 enthält ferner eine zweite Umlenkung 17, welche ebenfalls auf den Drehspiegel 10 ausgerichtet ist und so den über den Drehspiegel 10 erhaltenen Empfangsstrahl 9 zum Laserempfänger 8 hin umlenkt.

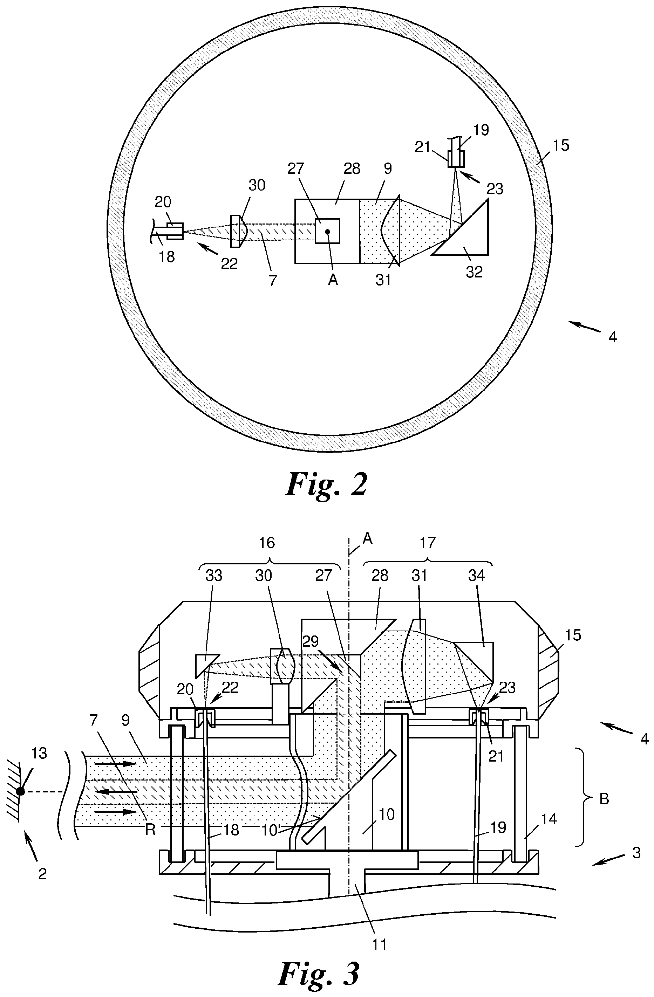

Beim Laserscanner 1 werden durch den Abschnitt B zwei flexible Lichtleiter 18, 19 geführt, entweder innerhalb des Ringfensters 14 (Fig. 1), außerhalb dessen oder durch das Ringfenster 14 hindurch (nicht gezeigt), und in zugehörigen Halterungen 20, 21 (Fig. 2) am Kopf 4 gehalten. Der erste Lichtleiter 18 ist an den Lasersender 6 angeschlossen, verläuft vom Lasersender 6 zur ersten Halterung 20 und führt den Sendestrahl 7 so von der Basis 3 zum Kopf 4. Der zweite Lichtleiter 19 verläuft von der zweiten Halterung 21 zum Laserempfänger 8, an welchen er angeschlossen ist, und führt den Empfangsstrahl 9 so vom Kopf 4 zur Basis 3.

Die Lichtleiter 18, 19 sind beispielsweise optische Fasern, z.B. Glasfasern aus Quarzglas oder Kunststoff, oder Flüssigkernfasern. Sie haben optional einen Durchmesser, der kleiner als jener des Sendestrahles 7 ist, um die Umgebung 2 auch dort vermessen zu können, wo einer der Lichtleiter 18, 19 gerade im Strahlengang liegt. Beispielsweise können die Lichtleiter 18, 19 jeweils einen Durchmesser von weniger als 1 mm aufweisen. Insbesondere kann der erste Lichtleiter 18 eine Monomodenfaser sein und der zweite Lichtleiter 19 eine Multimodenfaser. Ist der Lasersender 6 optional ein Faserlaser, kann der erste Lichtleiter 18 integral damit geformt sein.

An den Halterungen 20, 21, welche beispielsweise Buchsen- oder Steck-Halterungen sind, z.B. LWL-Steckverbinder, werden die Lichtleiter 18, 19 in vordefinierter Lage fixiert, d.h. starr ausgerichtet, und können optional bei Bedarf wieder davon gelöst werden.

In der in den Fig. 1 - 3 gezeigten fixierten Stellung richtet die erste Halterung 20 den Ausgang 22 des ersten Lichtleiters 18 starr auf die erste Umlenkung 16 aus und die zweite Halterung 20 den Eingang 23 des zweiten Lichtleiters 19 starr auf die zweite Umlenkung 17.

Sendet in dieser Ausführungsform der Lasersender 6 den Sendestrahl 7 aus, gelangt dieser über einen Eingang 24 in den ersten Lichtleiter 18 und über den ersten Lichtleiter 18 weiter zum Kopf 4, wo der Ausgang 22 aufgrund seiner starren Ausrichtung den Sendestrahl 7 auf die erste Umlenkung 16 leitet. Die erste Umlenkung 16 lenkt den Sendestrahl 7 dann auf die Spiegelfläche 10' des Drehspiegels 10 um, welche den Sendestrahl 7 durch das Ringfenster 14 hindurch auf den von der jeweiligen Drehstellung des Drehspiegels 10 abhängigen aktuellen Abtastpunkt 13 der Umgebung 2 ablenkt. Infolge der Drehung des Drehspiegels 10 wird so die Umgebung 2 Abtastpunkt 13 für Abtastpunkt 13 gescannt. Am Abtastpunkt 13 wird der Sendestrahl 7 reflektiert und als Empfangsstrahl 9 durch das Ringfenster 14, über den Drehspiegel 10 und die zweite Umlenkung 17 in den starr darauf ausgerichteten Eingang 23 des zweiten Lichtleiters 19 eingekoppelt. Vom zweiten Lichtleiter 19 wird der Empfangsstrahl 9 dann zum Laserempfänger 8 geführt und dort schließlich in Empfangssignale umgewandelt, **d.h.** empfangen.

Eine in den Laserscanner 1 integrierte oder daran angeschlossene Elektronikeinheit 26 steuert den Laserscanner 1 und wertet Empfangssignale des Laserempfängers 8 aus, um daraus eine Laufzeit der Sende- und Empfangsstrahlen 7, 9 zu ermitteln. Die Elektronikeinheit 26 steuert dabei optional die Drehbewegung des Motors 12 bzw. des Drehspiegels 10. Aus der ermittelten Laufzeit kann die Elektronikeinheit 26 die Entfernung des Laserscanners 1 zum Abtastpunkt 13 und aus der jeweiligen Drehstellung des Drehspiegels 10 beim Aussenden des Sendestrahls 7 die Richtung des Abtastpunktes 13 aus Sicht des Laserscanners 1 ermitteln, wie im Stand der Technik bekannt ist. Daraus kann entweder die Elektronikeinheit 26 oder eine separate Recheneinheit die Lage des Abtastpunkts 13 gegenüber dem Laserscanner 1 errechnen und aus einer Vielzahl von Abtastpunkten und allenfalls der Position und Lage des Laserscanners 1 in der Umgebung 2 in bekannter Weise eine 3D-Punktewolke bzw. ein 3D-Modell der Umgebung 2 erzeugen.

Jede der Umlenkungen 16, 17 kann auf verschiedene Arten ausgebildet sein, um den Sende- bzw. Empfangsstrahl 7, 9 umzulenken, z.B. ein oder mehrere optische Elemente wie Spiegel, Prismen, Linsen, usw. aufweisen, und unter verschiedenen Winkeln auf den Drehspiegel 10 und die Halterungen 20, 21 ausgerichtet sein. Ebenso kann jede Halterung 20, 21 sowie der Drehspiegel 10 verschiedene Ausrichtungen aufweisen.

Im Beispiel der Fig. 1 und 2 richtet die erste Umlenkung 16 den Sendestrahl 7 parallel zur Achse A (hier: entlang der Achse A) auf den Drehspiegel 10 und die zweite Umlenkung 17 erhält den Empfangsstrahl 9 vom Drehspiegel 10 ebenso parallel zur Achse A; im dargestellten Beispiel verlaufen die Sende- und Empfangsstrahlen 7, 9 in diesem Bereich jeweils entlang der Achse A und somit koaxial.

In der dargestellten Ausführungsform ist ein Winkel α, welchen der Sendestrahl 7 beim Verlassen des Drehspiegels 10 mit der Achse A einschließt, 90°, da der Drehspiegel 10 hier um einen Winkel β von 45° zur Achse A geneigt ist. Die Umgebung 2 wird dadurch in einer Ebene, d.h. scheibenförmig, abgetastet. Alternativ kann die erste Umlenkung 16, die zweite Umlenkung 17 und/oder der Drehspiegel 10 eine davon verschiedene Neigung zur Achse A aufweisen, wodurch sich eine andere Abtastform, z.B. Kegelform etc., ergibt.

Gemäß den Fig. 1 und 2 weist die erste Umlenkung 16 im Strahlengang des Sendestrahls 7 optional einen ersten Festspiegel 27 auf, der um einen Winkel γ (hier: 45°) zur Achse A geneigt ist und den Sendestrahl 7 auf den Drehspiegel 10 lenkt. Ferner weist die zweite Umlenkung 17 im Strahlengang des Empfangsstrahls 9 einen zweiten Festspiegel 28 auf, der optional gegengleich zum ersten Festspiegel 27 um einen dem Winkel γ entgegengesetzten Winkel δ (hier: 45°) zur Achse A geneigt ist und den Empfangsstrahl 9 zum Eingang 23 des zweiten Lichtleiters 19 lenkt. Wie in Fig. 2 dargestellt liegen der Sendestrahl 7 und der Empfangsstrahl 9 daher im Kopf 4 bezüglich der Festspiegel 27, 28 einander diametral gegenüber, wodurch auch die Lasersender und -empfänger 6, 8 einander in der Basis 3 diametral gegenüberliegen können.

Im Beispiel der Fig. 1 und 2 sind die Festspiegel 27, 28 optional platzsparend ineinander verschachtelt. Dazu hat der zweite Festspiegel 28 eine achszentrale Öffnung 29, in welcher der erste Festspiegel 27 angeordnet ist. Alternativ könnten die beiden Festspiegel 27, 28 in Richtung der Achse A gesehen nebeneinander oder entlang der Achse A übereinander angeordnet sein, um die Sende- und Empfangsstrahlen 7, 9 auf verschiedenen axialnormalen Ebenen zu führen (nicht gezeigt).

In der Ausführungsform der Fig. 1 und 2 hat die erste Umlenkung 16 eine optionale Kollimationsoptik 30 im Strahlengang des Sendestrahls 7 zu dessen Kollimation. Die Kollimationsoptik 30 ist zwischen der ersten Halterung 20 und dem Drehspiegel 10 angeordnet, u.zw. in Richtung es Sendestrahls 7 von (wie hier) oder nach dem optionalen ersten Festspiegel 27.

Zur Anpassung des Empfangsstrahls 9 an die numerische Apertur des zweiten Lichtleiters 19 hat die zweite Umlenkung 17 im Beispiel der Fig. 1 und 2 eine optionale Fokussieroptik 31 (hier: in Form einer einzigen Sammellinse) im Strahlengang des Empfangsstrahls 9. Diese ist zwischen dem Drehspiegel 10 der zweiten Halterung 21 angeordnet, u.zw. in Richtung des Empfangsstrahls 9 vor oder (wie hier) nach dem optionalen zweiten Festspiegel 28.

Optional wird ferner der Empfangsstrahl 9 vor dem Eingang 23 des zweiten Lichtleiters 19 gefaltet. Hiefür weist die zweite Umlenkung 17 zumindest einen dritten Festspiegel 32 auf, welcher der Fokussieroptik 31 im Strahlengang des Empfangsstrahls 9 nachgeordnet ist und den Strahlengang des Empfangsstrahls 9 **z.B.** in einer Ebene normal zur Achse A faltet (Fig. 2).

Fig. 3 zeigt eine weitere Ausführungsform des Kopfes 4 des Laserscanners 1 mit anderer Lage der Halterungen 20, 21 und der Lichtleiter 18, 19 zur Vermeidung einer Biegung der Lichtleiter 18, 19. Gleiche Bezugszeichen bezeichnen dabei gleiche Elemente wie im Beispiel der Fig. 1 und **2****.**

Sendeseitig weist in dieser Ausführungsform die erste Umlenkung 16 einen 45° zur Achse A geneigten vierten Festspiegel 33 auf, der hier den vom Ausgang 22 des ersten Lichtleiters 19 erhaltenen Sendestrahl 7 zum optionalen ersten Festspiegel 27 hin umgelenkt. Dabei richtet die erste Halterung 16 den Ausgang 22 parallel zur Achse A auf den vierten Festspiegel 33 aus und der erste Lichtleiter 18 verläuft im Wesentlichen achsparallel.

Alternativ oder ergänzend dazu weist im Beispiel der Fig. 3 die zweite Umlenkung 17 einen 45° zur Achse A geneigten fünften Festspiegel 34 auf, der den hier vom optionalen zweiten Festspiegel 28 erhaltenen Empfangsstrahl 9 zum Eingang 23 hin umlenkt. Dabei richtet die zweite Halterung 17 den Eingang 23 parallel zur Achse A auf den fünften Festspiegel 34 aus und der zweite Lichtleiters 19 verläuft ebenfalls im Wesentlichen achsparallel.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Laserscanner zum Scannen einer Umgebung (2) um eine Achse (A), umfassend:
eine Basis (3) mit einem Lasersender (6) zum Aussenden eines Sendestrahls (7), einem Laserempfänger (8) zum Empfangen des an der Umgebung als Empfangsstrahl (9) reflektierten Sendestrahls (7), einem zur Achse (A) geneigten gemeinsamen Drehspiegel (10) für die Sende- und Empfangsstrahlen (7, 9), sowie einem Motor (12) zum Drehen des Drehspiegels (10) um die Achse (A);
ein von der Basis (3) getragenes, rund um den Drehspiegel (10) herum angeordnetes Ringfenster (14) für den Durchtritt der Sende- und Empfangsstrahlen (7, 9); und
einen vom Ringfenster (14) basisabgewandt getragenen Kopf (4), der eine erste auf den Drehspiegel (10) ausgerichtete Umlenkung (16) für den Sendestrahl (7) und eine zweite auf den Drehspiegel (10) ausgerichtete Umlenkung (17) für den Empfangsstrahl (9) enthält;
wobei , an den Lasersender (6) ein flexibler erster Lichtleiter (18) und an den Laserempfänger (8) ein flexibler zweiter Lichtleiter (19) angeschlossen ist,
wobei der Kopf (3) eine erste Halterung (20) für den Ausgang (22) des flexiblen ersten Lichtleiters (18) und eine zweite Halterung (21) für den Eingang (23) des flexiblen zweiten Lichtleiters (19) trägt, und
wobei die erste Halterung (20) den Ausgang (22) starr auf die erste Umlenkung (16) und die zweite Halterung (21) den Eingang (23) starr auf die zweite Umlenkung (17) ausrichtet.

2. Laserscanner nach Anspruch 1, **dadurch gekennzeichnet, dass** die erste Umlenkung (16) dazu ausgebildet ist, den Sendestrahl (7) parallel zur Achse (A) auf den Drehspiegel (10) zu richten, und die zweite Umlenkung (17) dazu ausgebildet ist, den Empfangsstrahl (9) parallel zur Achse (A) vom Drehspiegel (10) zu erhalten.

3. Laserscanner nach Anspruch 1 oder 2, **dadurch gekennzeichnet, dass** die erste Umlenkung (16) einen dem Drehspiegel (10) im Strahlengang des Sendestrahls (7) vorgeordneten ersten Festspiegel (27) und die zweite Umlenkung (17) einen dem Drehspiegel (10) im Strahlengang des Empfangsstrahls (9) nachgeordneten zweiten Festspiegel (28) umfasst, wobei die beiden Festspiegel (27, 28) gegengleich jeweils um 45° zur Achse (A) geneigt sind.

4. Laserscanner nach Anspruch 3, **dadurch gekennzeichnet, dass** der zweite Festspiegel (28) eine achszentrale Öffnung (29) hat, in welcher der erste Festspiegel (27) angeordnet ist.

5. Laserscanner nach einem der Ansprüche 1 bis 4, **dadurch gekennzeichnet, dass** die erste Umlenkung (16) eine Kollimationsoptik (30) im Strahlengang des Sendestrahls (7) umfasst.

6. Laserscanner nach Anspruch 3 und 5, **dadurch gekennzeichnet, dass** die Kollimationsoptik (30) im Strahlengang des Sendestrahls (7) zwischen der ersten Halterung (20) und dem ersten Festspiegel (27) angeordnet ist.

7. Laserscanner nach einem der Ansprüche 1 bis 6, **dadurch gekennzeichnet, dass** die zweite Umlenkung (17) eine Fokussieroptik (31) im Strahlengang des Empfangsstrahls (9) umfasst.

8. Laserscanner nach Anspruch 3 und 7, **dadurch gekennzeichnet, dass** die Fokussieroptik (31) im Strahlengang des Empfangsstrahls (9) zwischen dem zweiten Festspiegel (28) und der zweiten Halterung (21) angeordnet ist.

9. Laserscanner nach Anspruch 7 oder 8, **dadurch gekennzeichnet, dass** die zweite Umlenkung (17) zumindest einen der Fokussieroptik (31) im Strahlengang des Empfangsstrahles (9) nachgeordneten dritten Festspiegel (32) zur axialnormalen Faltung des Empfangsstrahls (9) umfasst.

10. Laserscanner nach einem der Ansprüche 1 bis 9, **dadurch gekennzeichnet, dass** die erste Halterung (20) den Ausgang (22) parallel zur Achse (A) auf einen um 45° zur Achse geneigten vierten Festspiegel (33) der ersten Umlenkung (16) ausrichtet.

11. Laserscanner nach einem der Ansprüche 1 bis 10, **dadurch gekennzeichnet, dass** die zweite Halterung (21) den Eingang (23) parallel zur Achse (A) auf einen um 45° zur Achse (A) geneigten fünften Festspiegel (34) der zweiten Umlenkung (17) ausrichtet.

12. Laserscanner nach einem der Ansprüche 1 bis 11, **dadurch gekennzeichnet, dass** das Ringfenster (14) die Form eines zur Achse (A) konzentrischen Kreisringes hat.

## Claims

1. A laser scanner for scanning an environment (2) about an axis (A), comprising
a base (3) with a laser transmitter (6) for transmitting a transmission beam (7), a laser receiver (8) for receiving the transmission beam (7) reflected from the environment as a reception beam (9), a shared rotating mirror (10) for the transmission and reception beams (7, 9), which is inclined towards the axis (A), and a motor (12) for rotating the rotating mirror (10) about the axis (A);
an annular window (14) for the passage of the transmitting and reception beams (7, 9), which is supported by the base (3) and arranged all around the rotating mirror (10); and
a head (4), which is supported by the annular window (14) so that it is facing away from the base and which contains a first deflector (16) for the transmission beam (7), said first deflector being directed towards the rotating mirror (10) and a second deflector (17) for the reception beam (9), said second deflector being directed towards the rotating mirror (10);
wherein a flexible first light guide (18) is connected to the laser transmitter (6) and a flexible second light guide (19) is connected to the laser receiver (8),
wherein the head (3) supports a first support (20) for the outlet (22) of the flexible first light guide (18) and a second support (21) for the inlet (23) of the flexible second light guide (19), and
wherein the first support (20) rigidly directs the outlet (22) towards the first deflector (16) and the second support (21) rigidly directs the inlet (23) towards the second deflector (17).

2. The laser scanner according to claim 1, **characterized in that** the first deflector (16) is configured to direct the transmission beam (7) parallel to the axis (A) towards the rotating mirror (10), and the second deflector (17) is configured to receive the reception beam (9) parallel to the axis (A) from the rotating mirror (10).

3. The laser scanner according to claim 1 or 2, **characterized in that** the first deflector (16) comprises a first fixed mirror (27) which is arranged upstream of the rotating mirror (10) in the beam path of the transmission beam (7) and the second deflector (17) comprises a second fixed mirror (28) which is arranged downstream of the rotating mirror (10) in the beam path of the reception beam (9), wherein the two fixed mirrors (27, 28) are each inclined in opposing directions by 45° with respect to the axis (A).

4. The laser scanner according to claim 3, **characterized in that** the second fixed mirror (28) has an axis-centred opening (29) in which the first fixed mirror (27) is arranged.

5. The laser scanner according to any one of claims 1 to 4, **characterized in that** the first deflector (16) comprises a collimation optics (30) in the beam path of the transmission beam (7).

6. The laser scanner according to claims 3 and 5, **characterized in that** the collimation optics (30) is arranged in the beam path of the transmission beam (7) between the first support (20) and the first fixed mirror (27).

7. The laser scanner according to any one of claims 1 to 6, **characterized in that** the second deflector (17) comprises a focussing optics (31) in the beam path of the reception beam (9).

8. The laser scanner according to claims 3 and 7, **characterized in that** the focussing optics (31) is arranged in the beam path of the reception beam (9) between the second fixed mirror (28) and the second support (21).

9. The laser scanner according to claim 7 or 8, **characterized in that** the second deflector (17) comprises at least one third fixed mirror (32) arranged downstream of the focussing optics (31) in the beam path of the reception beam (9) for axial-normal folding of the reception beam (9).

10. The laser scanner according to any one of claims 1 to 9, **characterized in that** the first support (20) directs the outlet (22) parallel to the axis (A) towards a fourth fixed mirror (33) of the first deflector (16), said fourth fixed mirror being inclined at 45° with respect to the axis.

11. The laser scanner according to any one of claims 1 to 10, **characterized in that** the second support (21) directs the input (23) parallel to the axis (A) towards a fifth fixed mirror (34) of the second deflector (17), said fifth fixed mirror being inclined at 45° with respect to the axis (A).

12. The laser scanner according to any one of claims 1 to 11, **characterized in that** the annular window (14) has the shape of a circular ring which is concentric to the axis (A).

## Revendications

1. Balayeur laser pour le balayage d'un environnement (2) autour d'un axe (A) comprenant :
une base (3) avec un émetteur laser (6) pour l'émission d'un faisceau d'émission (7), un récepteur laser (8) pour la réception d'un faisceau d'émission (7) réfléchi par l'environnement en tant que faisceau de réception (9), un miroir rotatif (10) commun incliné vers l'axe (A) pour les faisceaux d'émission et de réception (7, 9), ainsi qu'un moteur (12) permettant la rotation du miroir rotatif (10) autour de l'axe (A) ;
une fenêtre annulaire (14) portée par la base (3) disposée tout autour du miroir rotatif (10) pour le passage des faisceaux d'émission et de réception (7, 9) ; et
une tête (4) portée par la fenêtre annulaire (14) s'éloignant de la base, ladite tête contenant un premier déviateur (16) orienté sur le miroir rotatif (10) pour le faisceau d'émission (7) et un deuxième déviateur (17) orienté sur le miroir rotatif (10) pour le faisceau de réception (9) ;
dans lequel un premier guide de lumière (18) flexible est relié à l'émetteur laser (6) et un deuxième guide de lumière (19) flexible est relié au récepteur laser (8),
dans lequel la tête (3) porte un premier support (20) pour la sortie (22) du premier guide de lumière (18) flexible et un deuxième support (21) pour l'entrée (23) du deuxième guide de lumière (19) flexible, et
dans lequel le premier support (20) oriente la sortie (22) de manière rigide sur le premier déviateur (16) et le deuxième support (21) oriente l'entrée (23) de manière rigide sur le deuxième déviateur (17).

2. Balayeur laser selon la revendication 1, **caractérisé en ce que** le premier déviateur (16) est conçu pour diriger le faisceau d'émission (7) parallèlement par rapport à l'axe (A) sur le miroir rotatif (10) et le deuxième déviateur (17) est conçu pour recevoir le faisceau de réception (9) parallèlement par rapport à l'axe (A) du miroir rotatif (10).

3. Balayeur laser selon la revendication 1 ou 2, **caractérisé en ce que** le premier déviateur (16) comprend un premier miroir fixe (27) disposé en amont du miroir rotatif (10) sur le trajet de faisceau du faisceau d'émission (7) et le deuxième déviateur (17) comprend un deuxième miroir fixe (28) disposé en aval du miroir rotatif (10) sur le trajet de faisceau du faisceau de réception (9), où les deux miroirs fixes (27, 28) sont respectivement inclinés dans des directions opposées de 45° par rapport à l'axe (A).

4. Balayeur laser selon la revendication 3, **caractérisé en ce que** le deuxième miroir fixe (28) a un orifice (29) central à l'axe dans lequel est disposé le premier miroir fixe (27).

5. Balayeur laser selon l'une des revendications 1 à 4, **caractérisé en ce que** le premier déviateur (16) comprend une optique de collimation (30) sur le trajet de faisceau du faisceau d'émission (7).

6. Balayeur laser selon la revendication 3 et 5, **caractérisé en ce que** l'optique de collimation (30) est disposée sur le trajet de faisceau du faisceau d'émission (7) entre le premier support (20) et le premier miroir fixe (27).

7. Balayeur laser selon l'une des revendications 1 à 6, **caractérisé en ce que** le deuxième déviateur (17) comprend une optique de focalisation (31) sur le trajet de faisceau du faisceau de réception (9).

8. Balayeur laser selon la revendication 3 et 7, **caractérisé en ce que** l'optique de focalisation (31) est disposée sur le trajet de faisceau du faisceau de réception (9) entre le deuxième miroir fixe (28) et le deuxième support (21).

9. Balayeur laser selon la revendication 7 ou 8, **caractérisé en ce que** le deuxième déviateur (17) comprend au moins un troisième miroir fixe (32) disposé en aval de l'optique de focalisation (31) sur le trajet de faisceau du faisceau de réception (9) pour une convolution axiale normale du faisceau de réception (9).

10. Balayeur laser selon l'une des revendications 1 à 9, **caractérisé en ce que** le premier support (20) oriente la sortie (22) parallèlement par rapport à l'axe (A) sur un quatrième miroir fixe (33) du premier déviateur (16) incliné de 45° par rapport à l'axe.

11. Balayeur laser selon l'une des revendications 1 à 10, **caractérisé en ce que** le deuxième support (21) oriente l'entrée (23) parallèlement par rapport à l'axe (A) sur un cinquième miroir fixe (34) du deuxième déviateur (17) incliné de 45° par rapport à l'axe (A).

12. Balayeur laser selon l'une des revendications 1 à 11, **caractérisé en ce que** la fenêtre annulaire (14) a la forme d'un anneau circulaire concentrique à l'axe (A).
